# EUROPEAN PATENT SPECIFICATION

(11) **EP 2 816 883 B1**
(45) Date of publication and mention of the grant of the patent: **12.06.2019**
(21) Application number: 13753203.2
(22) Date of filing: 25.02.2013
(51) Int. Cl.: A01B 79/00, A01G 25/16

(54) **CONTROL DEVICE FOR CROP MANAGEMENT**
STEUERGERÄT FÜR PFLANZENBAU
DISPOSITIF DE COMMANDE POUR LA GESTION DE RÉCOLTES

(30) Priority: 23.02.2012 ES 201200165 P
(43) Date of publication of application: 31.12.2014
(73) Proprietor: Capilla Manzano, Marc, 17200 Palafrugell (Girona) (ES)
(72) Inventor: MUNTADA PASSARELL, Marc, 17200 Palafrugell (Girona) (ES)
(74) Representative: Ponti & Partners, S.L.P
(86) International application number: PCT/IB2013/001300
(87) International publication number: WO 2013/136194

(56) References cited:
- EP-A2- 2 196 085
- US-B1- 7 203 576

## Description

### Technical Field of the Invention

This invention, which is related to crop management, proposes an intelligent device that automatically monitors said management, using for this purpose real-time control of the vital parameters pertaining to crops and their external agents, in order to carry out those actions necessary to maintain the plants in the best condition possible.

### Background of the Invention

Currently, there are devices on the market for carrying out automatic control of crop irrigation, not needing therefore the constant presence of a person. These devices are based on programming the timing related to start-up, duration and repetitive cycles, thus managing the opening and closing of electrovalves for irrigation systems. US7203576B1 discloses such a control device for crop management.

With said devices, the care of plants and one of the most important factors thereof, which is irrigation management that provides the main feeding source for plants, is conditioned to the correct programming of the device on the part of the user or, in very specific cases, by an expert, but in any case, in an intuitive way trying to figure out the most suitable programming for crop irrigation, according to the typology and environment of the same. Furthermore, said programming is carried out without knowing the real needs of the plants at each moment, and the same is not modifiable in real-time according to said needs or the environmental changes, such as weather variations and the changing nature of the land.

Moreover, in most cases, said programmable devices for automatic irrigation need an external power source and must be connected to the electric grid on a constant basis, which supposes a great limitation, given that an electric grid is not available in many places of cultivation, and when said connections are available, the wiring for the same must be installed, thus incurring in additional costs. The wiring likewise supposes a problem in cultivation areas, given that it must be installed so as not to hinder cultivation work and must avoid damaging effects due to humidity or other factors.

Some of those automatic irrigation devices use connections with sensors, mainly for rain or humidity, but generally said connections are wirings connected directly to device ports, thus entailing those problems inherent in the wiring as previously mentioned, while in addition to this, the number of connection ports is very limited.

These devices can function fairly well within controlled environments, such as greenhouses, where external and internal factors are controlled for the most part, so that with good programming carried out by an expert, some reasonably acceptable results can be obtained; but in most cases, such controlled environments are not usually available and the control devices do not have access to important and essential data, such as the vital parameters of crops or data related to the environment, e.g. weather factors and land structure. This is dynamic data that changes with time, given that plants are living beings that evolve and have different life cycles, while the environment changes continually by interaction with weather agents for example.

### Disclosure of the Invention

With this invention, a device is made available for the automatic control of plant cultivation, making it possible to determine the real needs of the crops involved, according to the typology of the same and the characteristics of the place in which these are located, in order to manage, in the best possible way, the use of natural resources, such as water and electric power in the application thereof to the plants.

The control device according to the invention is comprised of a functional unit formed by a series of operating modules interrelated between each other, including a communication system within the unit for relating the same with other similar devices, and another communication system for establishing connection with external independent sources, such as the Internet.

The device's functional unit consists of a central module, a sensorization module, a knowledge module, an experience module, an action module, a power module, a basic communication module, an advanced communication module and a module for interaction with the user.

The central module is the heart of the device, receiving information from the other modules and from the outside, thus managing all the activity of the device.

The sensorization module collects physical parameters related to the plants and the environment in which these are located, for the purpose of informing the central module regarding said data.

The knowledge module is a storage center for data related to the plants and the environment thereof, obtaining the same from technical information concerning plant care methods, weather conditions, etc.

The experience module is a storage center for data obtained from actions developed by the device during previous uses.

The action module determines operation management for systems that are connected to the device, thus providing, for example, the water and fertilizer necessary for the nutrition of plants.

The power module is a storage center for electric energy that enables the device to operate independently, providing the necessary power for the operation of the functional elements.

The basic communication module enables the device to establish communication with other similar devices, in order to determine a common control network over the extension of a specific crop area.

The advanced communication module enables the device to establish communication with external sources, in order to obtain additional information useful for crop management, transmitting likewise data needed for carrying out the remote control of said management.

The module for interaction with the user enables the same to configure operating modes of the device, and to be informed of any incidents that may occur during operation.

In view of the aforesaid, the control device according to the invention has some very beneficial characteristics for the control of crop management, developing a life of its own and preferential status for said function.

### Brief Description of the Drawings

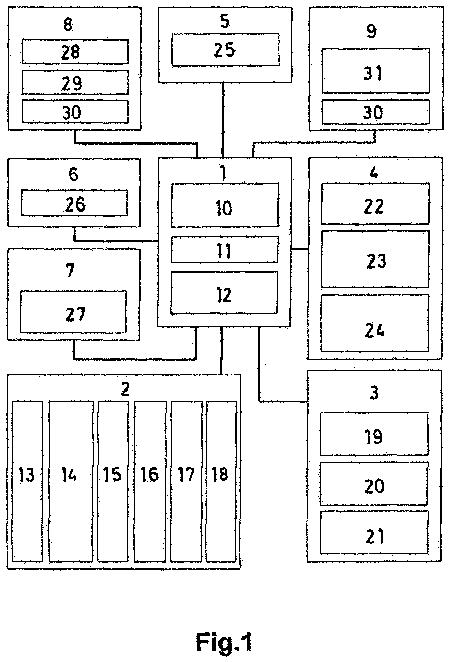

Figure 1 shows a block diagram of the control device's functional unit.

### Detailed Description of the Invention

The purpose of the invention refers to a device that makes it possible to monitor and control, in real-time, the vital parameters of plants and their external agents, so as to determine the actions to be taken, such as irrigation, fertilizer application and other tasks, in order to provide the best conditions for the development of the plants.

To achieve this, the recommended device is comprised of, according to figure 1, a functional unit consisting of a central module (1), a sensorization module (2), a knowledge module (3), an experience module, (4), an action module (5), a power module (6), a basic communication module (7), an advanced communication module (8), and a module for interaction with the user (9), all of which develop different operating functions.

The central module (1) is the brain of the device and develops a management function (10) over the remaining modules, supplying and extracting information from the same as needed. This is the decision-making module, collecting data supplied by other modules within the device, as well as information from external sources, developing also a function (11) that determines the actions that must be implemented in the treatment of the plants involved.

Said central module likewise carries out a function (12) of recommendations for users, that is to say, it takes into account all the information received and recommends additional tasks for the user to carry out in plant maintenance, such as pruning, fruit harvesting, replanting, etc., emitting user notification alarms in case some problem is detected in the device, or the imminence of some weather factor that could cause damage to the crops.

The sensorization module (2) carries out the function of collecting physical parameters related to the plants and their environment, including a humidity sensor (13) to measure ground humidity, a temperature sensor (14) to measure ground temperature, a fertilizer sensor (15) to measure the proportion of fertilizer in the ground, a humidity sensor (16) for measuring the humidity in the air, a temperature sensor (17) for measuring the air temperature and a light sensor (18) for measuring the luminosity of the place in which the crops, being monitored, are located.

The fertilizer sensor (15), the humidity sensor (13) for measuring ground humidity, and the temperature sensor (14) for measuring ground temperature, are located in the lower part of the device, which must be buried underground at a specific depth; while, on the other hand, the humidity sensor (16) for measuring air humidity, the temperature sensor (17) for measuring air temperature, and the light sensor (18), are located in the upper part of the device aboveground.

Therefore, when installing the system, the device must be half-buried in order to provide a correct reading of the parameters that must be collected, taking into consideration a location near the plants to be monitored, at a point on the land that is the most representative of the crop area. In the case of crops located on an extension of land, there must be as many devices as there are different geographical areas on the land, according to the parameters to be measured. Likewise, the devices must be placed in each of the areas at the points that better identify the physical characteristics of each area. In this way, said sensorization module (2) enables the device to know which the constant factors of the environment or habitat are of all the plants on the extension of crop area.

The knowledge module (3) has the purpose of storing different data related to the plants and their environment, thus obtaining better knowledge of the needs and characteristics of the crops and the ensuing application of the same in the device's management functions. Said data is mainly technical information (19) regarding the care of specific types of plants to be treated, weather information (20), and information (21) concerning the climate in the place of application.

The experience module (4) stores the information related to the experience undergone by the device, such as the reading, in previous uses, of sensors, actions, etc., in order to employ said information to improve the performance of the device, providing a history (22) of actions, a history (23) of sensor readings and a history (24) of recommendations and alarms.

The action module (5) makes it possible to control actuation systems connected to the device, such as irrigation and fertilizer supply systems, having, at least, one electrovalve (25) for controlling the opening and closing of the aforesaid irrigation and fertilizer supply systems.

The power module (6), which is powered by a battery (26), supplies the necessary electric energy for operating the device as needed, providing likewise the necessary impulses for opening and closing the electrovalves (25) and other actuators that may be connected to the device.

The device has the capacity of operating in active mode or in passive mode, executing the active mode only for carrying out specific tasks, such as sensor reading, data downloading or activation and deactivation of the electrovalve (25), among others; carrying out said tasks in active mode at specific moments and for short periods of time, then returning to passive mode, in which it remains most of the time. In passive mode, the device consumes a minimum amount of electric energy, only what is required to remain in waiting to receive some event that causes it go into active mode. This enables the device to obtain a long battery life, with the capacity of functioning with any type of battery (6) that supplies the necessary voltage for the operating elements that need it.

The basic communication module (7) enables the device to communicate with other similar devices, using for this purpose a wireless transmission (27) from any system of those currently on the market; in other words, within a same crop area there can be several devices that communicate between each other, thus forming a network where each device functions as a node, exchanging information between all of them. In this way, the devices can know the status of nearby devices, thus making it possible to control them, in order to prevent or diagnose possible failures or malfunctions in any of them.

The advanced communication module (8) enables the device to communicate with external sources, such as the Internet, servers or mobile phones. In this manner all the devices within the same system can communicate with a central server, to which they provide the information captured by each of them, as well as the information regarding the tasks to perform, in order to process and manage this data.

By way of this advanced communication module (8), the device connects to the Internet in order to obtain various types of information, such as weather information. This enables the user to control the device or devices through a web platform or from a mobile phone, thus establishing communication through wireless technology, which may vary according to the needs of the user. For example, by way of Wi-Fi communication (28), if in the place of application there is this type of coverage, or GPRS (3G) communication (29), if Wi-Fi coverage is not available in the place and mobile coverage is.

Included likewise is a geolocation device (30) that establishes the geographical location of the place in which the system at issue is located.

In the event that several devices are located in the same crop area, at least one will function as external communicator, that is to say, it will be the one with access to external communication. This is in addition to the communication between the different devices within the system, where these devices may only have communication in relation to the other devices of the system. Therefore, the advanced communication module (8) is optional in each device, but there should be, within each system, at least one device equipped with this module for performing external communication. In view of the aforesaid, it is only necessary to have, by distribution networks, one device as minimum with the capacity for external communication, while the remaining devices may be the simple type.

The module for interaction with the user (9) makes it possible, through a series of LED's (30), buttons (31), or a touch screen, for users to configure operating modes, to establish feedback with options, and to be informed regarding possible alarms or recommendations.

The device has a manual operating mode and an automatic operating mode; the automatic operating mode depends on whether the device is connected or not to some type of plant treatment operating system. Thus, this automatic operating mode enables the device to control, in an optimum and intelligent manner, basic plant maintenance tasks, such as irrigation and/or fertilizer supply tasks; while the manual operating mode delegates all the maintenance to the user, that is to say, the user is the one that has to perform all the tasks pertaining to the crops (irrigate, fertilize, etc.), but with the advice of the system, which informs the user regarding the tasks that must be carried out, when to do them and how to do them.

## Claims

1. Control device for crop management, to automatically determine, according to information related to plants involved and their environment, the actions required for maintenance of the plants involved and their environment, wherein the control device has a functional unit comprised of operating modules that are interrelated between each other, with a communication system for establishing a relation with other control devices within a system for the control of an extensive crop area, as well as a communication system for establishing a relation with external sources; wherein the functional unit comprises a central module (1) that manages the entire functional unit, a sensorization module (2) that collects physical parameters of the plants and their environment, a knowledge module (3) that stores technical data related to the plants and their environment, an experience module (4) that stores data from the previous use of the control device, an action module (5) that determines the operating management of systems connected to the control device, a power module (6) that provides the necessary electric energy for functional activities, a basic communication module (7) that enables communication between different control devices, an advanced communication module (8) that enables communication with external sources, and a module for interaction with users (9), which makes it possible to configure operating modes and provides users with incident reports; **characterised in that** the sensorization module (2) includes humidity sensors (13 and 16) to measure ground humidity and air humidity, temperature sensors (14 and 17) for measuring ground temperature and air temperature, a fertilizer sensor (15) that measures the proportion of fertilizer present in the ground, and a light sensor (18) that measures the luminosity of the place of application; wherein the control device is adapted to be half-buried in the ground during installation, with a lower part of the control device being buried under ground at a specific depth and an upper part of the control device being above ground, wherein the fertilizer sensor (15), the humidity sensor (13) for measuring ground humidity, and the temperature sensor (14) for measuring ground temperature are located in said lower part; and wherein the humidity sensor (16) for measuring air humidity, the temperature sensor (17) for measuring air temperature, and the light sensor (18) are located in said upper part.

2. Control device for crop management, according to claim 1, wherein the action module (5) has, at least, one electrovalve (25).

3. Control device for crop management, according to claim 1 or 2, wherein the basic communication module (7) establishes communication with other control devices through wireless transmission (27).

4. Control device for crop management, according to any of claims 1 to 3, wherein the advanced communication module (8) establishes communication with external sources, such as the Internet, servers or mobile phones, using wireless communication technology (28, 29) and includes a geolocation device (30) that establishes the geographical location of the same.

5. System for the control of an extensive crop area, comprising multiple control devices according to any of claims 1 to 4 able to communicate between each other, thus forming a network.

## Patentansprüche

1. Steuervorrichtung für ein Anbaumanagement, um automatisch gemäß Informationen bezüglich beteiligter Pflanzen und ihrer Umgebung die Handlungen zu bestimmen, die für eine Pflege der beteiligten Pflanzen und ihrer Umgebung notwendig sind, wobei die Steuervorrichtung eine funktionale Einheit besitzt, die Betriebsmodule aufweist, die in gegenseitiger Beziehung zueinander stehen, mit einem Kommunikationssystem zum Einrichten einer Beziehung mit anderen Steuervorrichtungen innerhalb eines Systems für die Steuerung einer ausgedehnten Anbaufläche, als auch einem Kommunikationssystem zum Einrichten einer Beziehung mit externen Quellen; wobei die funktionalen Einheit umfasst: ein zentrales Modul (1), das die gesamte funktionale Einheit managt, ein Sensorisierungsmodul (2), das physikalische Parameter der Pflanzen und ihrer Umgebung sammelt, ein Wissensmodul (3), das technische Daten bezüglich der Pflanzen und ihrer Umgebung speichert, ein Erfahrungsmodul (4), das Daten von der vorherigen Verwendung der Steuervorrichtung speichert, ein Handlungsmodul (5), das das Betriebsmanagement von Systemen bestimmt, die mit der Steuervorrichtung verbunden sind, ein Leistungsmodul (6), das die notwendige elektrische Energie für funktionale Aktivitäten liefert, ein Basiskommunikationsmodul (7), das eine Kommunikation zwischen verschiedenen Steuervorrichtungen ermöglicht, ein erweitertes Kommunikationsmodul (8), das eine Kommunikation mit externen Quellen ermöglicht, und ein Modul für eine Wechselwirkung mit Anwendern (9), welches es möglich macht, Betriebsarten zu konfigurieren und Anwender mit eingehenden Berichten versorgt; **dadurch gekennzeichnet, dass**
das Sensorisierungsmodul (2) Feuchtigkeitssensoren (13 und 16) zum Messen von Bodenfeuchtigkeit und von Luftfeuchtigkeit, Temperatursensoren (14 und 17) zum Messen von Bodentemperatur und von Lufttemperatur, einen Düngersensor (15), der den Anteil von Dünger misst, der in dem Boden vorhanden ist, und einen Lichtsensor (18), der die Helligkeit des Anwendungsorts misst, umfasst; wobei die Steuervorrichtung ausgelegt ist, während der Installation halb im Boden verborgen zu sein, wobei ein unterer Teil der Steuervorrichtung unter der Erde in einer spezifischen Tiefe verborgen ist und ein oberer Teil der Steuervorrichtung über der Erde ist, wobei sich der Düngersensor (15), der Feuchtigkeitssensor (13) zum Messen der Bodenfeuchtigkeit und der Temperatursensor (14) zum Messen der Bodentemperatur in dem unteren Teil befinden; und wobei sich der Feuchtigkeitssensor (16) zum Messen der Luftfeuchtigkeit, der Temperatursensor (17) zum Messen der Luftfeuchtigkeit und der Lichtsensor (18) sich in dem oberen Teil befinden.

2. Steuervorrichtung für ein Anbaumanagement nach Anspruch 1, wobei das Handlungsmodul (5) zumindest ein Elektroventil (25) besitzt.

3. Steuervorrichtung für ein Anbaumanagement nach Anspruch 1 oder 2, wobei das Basiskommunikationsmodul (7) eine Kommunikation mit anderen Steuervorrichtungen durch eine drahtlose Übertragung (27) einrichtet.

4. Steuervorrichtung für ein Anbaumanagement nach einem der Ansprüche 1 bis 3, wobei das erweiterte Kommunikationsmodul (8) eine Kommunikation mit externen Quellen, wie etwa das Internet, Servern oder Mobiltelefonen, unter Verwendung von drahtloser Kommunikationstechnologie (28, 29) einrichtet und eine Geolokalisierungsvorrichtung (30) umfasst, die ihren geografischen Ort feststellt.

5. System für die Steuerung einer ausgedehnten Anbaufläche, das mehrere Steuervorrichtungen nach einem der Ansprüche 1 bis 4 umfasst, die miteinander kommunizieren können und somit ein Netz bilden.

## Revendications

1. Dispositif de contrôle pour la gestion des cultures, pour déterminer automatiquement, selon des informations relatives à des plantes concernées et à leur environnement, les actions requises pour l'entretien des plantes concernées et de leur environnement, le dispositif de contrôle possédant une unité fonctionnelle composée de modules de fonctionnement qui sont interdépendants, avec un système de communication pour établir une relation avec d'autres dispositifs de contrôle au sein d'un système pour le contrôle d'une zone de culture extensive, ainsi qu'un système de communication pour établir une relation avec des sources externes ; dans lequel l'unité fonctionnelle comprend un module central (1) qui gère l'ensemble de l'unité fonctionnelle, un module de sensorisation (2) qui collecte des paramètres physiques des plantes et de leur environnement, un module de connaissance (3) qui stocke des données techniques relatives aux plantes et à leur environnement, un module d'expérience (4) qui stocke des données de l'utilisation précédente du dispositif de contrôle, un module d'action (5) qui détermine la gestion opérationnelle de systèmes connectés au dispositif de contrôle, un module d'alimentation (6) qui fournit l'énergie électrique nécessaire pour les activités fonctionnelles, un module de communication de base (7) qui permet la communication entre différents dispositifs de contrôle, un module de communication évolué (8) qui permet la communication avec des sources externes, et un module pour l'interaction avec des utilisateurs (9), qui rend possible de configurer des modes opérationnels et fournit aux utilisateurs des rapports d'incidents ; **caractérisé en ce que** le module de sensorisation (2) comporte des capteurs d'humidité (13 et 16) pour mesurer l'humidité du sol et l'humidité de l'air, des capteurs de température (14 et 17) pour mesurer la température du sol et la température de l'air, un capteur de fertilisant (15) qui mesure la proportion de fertilisant présent dans le sol, et un capteur de lumière (18) qui mesure la luminosité de l'endroit d'application ; le dispositif de contrôle étant adapté pour être à moitié enterré dans le sol pendant l'installation, avec une partie inférieure du dispositif de contrôle enterrée sous le sol à une profondeur spécifique et une partie supérieure du dispositif de contrôle au-dessus du sol, dans lequel le capteur de fertilisant (15), le capteur d'humidité (13) pour mesurer l'humidité du sol, et le capteur de température (14) pour mesurer la température du sol sont situés dans ladite partie inférieure ; et dans lequel le capteur d'humidité (16) pour mesurer l'humidité de l'air, le capteur de température (17) pour mesurer la température de l'air, et le capteur de lumière (18) sont situés dans ladite partie supérieure.

2. Dispositif de contrôle pour la gestion des cultures, selon la revendication 1, dans lequel le module d'action (5) possède, au moins, une électrovanne (25).

3. Dispositif de contrôle pour la gestion des cultures, selon la revendication 1 ou 2, dans lequel le module de communication de base (7) établit la communication avec d'autres modules de contrôle par le biais d'une transmission sans fil (27).

4. Dispositif de contrôle pour la gestion des cultures, selon l'une quelconque des revendications 1 à 3, dans lequel le module de communication évolué (8) établit la communication avec des sources externes, telles que l'Internet, des serveurs ou téléphones mobiles, au moyen d'une technologie de communication sans fil (28, 29) et comporte un dispositif de géolocalisation (30) qui établit la localisation géographique de celui-ci.

5. Système pour le contrôle d'une zone de culture extensive, comprenant de multiples dispositifs de contrôle selon l'une quelconque des revendications 1 à 4 aptes à communiquer entre eux, formant ainsi un réseau.
